# EUROPÄISCHE PATENTSCHRIFT

(11) **EP 1 562 718 B1**
(45) Veröffentlichungstag und Bekanntmachung des Hinweises auf die Patenterteilung: **17.05.2006**
(21) Anmeldenummer: 03750462.8
(22) Anmeldetag: 29.08.2003
(51) Int. Cl.: B23D 47/04, B27G 5/02

(54) **GEHRUNGSANSCHLAG**
MITRE STOP
BUTEE A ONGLET

(30) Priorität: 14.11.2002 DE 10253011
(43) Veröffentlichungstag der Anmeldung: 17.08.2005
(73) Patentinhaber: Wilhelm Altendorf GmbH & Co. KG, D-32429 Minden (DE)
(72) Erfinder: ALTENDORF, Wilfried, 32429 Minden (DE); DOMURATH, Michael, 32469 Petershagen (DE)
(74) Vertreter: Eisenführ, Speiser & Partner
(86) Internationale Anmeldenummer: PCT/EP2003/009578
(87) Internationale Veröffentlichungsnummer: WO 2004/043635

(56) Entgegenhaltungen:
- EP-A- 0 118 077
- DE-A- 3 308 749
- DE-A- 19 729 552
- DE-U- 9 207 811

## Beschreibung

Die Erfindung betrifft einen Gehrungsanschlag für ein Werkstück, das auf einem relativ zu einem Bearbeitungswerkzeug längsbeweglichen Werktisch angeordnet ist, mit einer Anschlagschiene, die auf dem Werktisch um eine Achse schwenkbar gelagert ist und eine zur Oberfläche des Werktisches senkrechte Anschlagfläche aufweist.

Es ist seit langem bekannt, einen derartigen Gehrungsanschlag beispielsweise auf dem Querschlitten einer Formatkreissäge anzuordnen. Dabei ist der Quertisch üblicherweise seitlich an einem Rollwagen o. dgl. der Kreissäge befestigt, der zum Vorschub des Werkstückes gegenüber dem Sägeblatt dient.

Um mit einer solchen Maschine das Werkstück auf Gehrung zu schneiden, wird die Anschlagschiene um ihre Schwenkachse bis zu dem gewünschten Winkel gegenüber der Schnittrichtung verschwenkt. Allen dort bekannten schwenkbaren Anschlagsschienen ist gemeinsam, dass die (senkrechte) Schwenkachse durch die Längsachse der Anschlagschiene geht, welche auf deren halber Breite verläuft (vgl. z.B. DE 33 08 749 C2). Dadurch verändert sich beim Schwenken dieser Anschlagschiene der Abstand eines beliebigen Punktes auf der Anschlagfläche von der Schnittebene nicht nur um die von der Schwenkung bewirkte Vergrößerung, sondern auch um die Verkleinerung oder Vergrößerung (je nach Schwenkrichtung) infolge des Abstandes der Schwenkachse von der Anschlagfläche. Das macht Längenkorrekturen, wie sie zur mechanischen Längsverschiebung der Anschlagsschiene zwecks Beibehaltung einer bestimmten fertigen Werkstücklänge etwa aus dem DE 92 07 811 U1 bekannt sind, zusätzlich schwierig.

Dieses Problem löst die Erfindung auf überraschend einfache Weise dadurch, dass sie die Schwenkachse der Anschlagschiene in die Ebene der Anschlagfläche legt. Auf diese Weise beschränkt sich die Längenveränderung eines bestimmten Punktes auf der Anschlagfläche auf die dem Tangens des Schwenkwinkels entsprechende Entfernung der Anschlagschiene von der Schnittebene, was eine lediglich von der eindeutigen trigonometrischen Funktion abhängige Korrektur - sofern man sie wünscht - ermöglicht.

Aus der AT 183 946 C ist eine Gehrungssäge bekannt, deren handbetätigtes Bügelsägewerkzeug um eine Achse schwenkbar ist, die in der Ebene einer Anschlagplatte für das Werkstück liegen soll. Eine Anregung für das Erfindungskonzept konnte davon nicht ausgehen, weil abgesehen vom fehlenden Werkstücksvorschub (beweglicher Werktisch) das Werkstück nicht an einer schwenkbaren Anschlagschiene anliegt und überdies die Anschlagplatte eine endliche Dicke hat, die nicht mit einer Achse zusammenfallen kann; gemäß Fig. 4 der Druckschrift liegt das Werkstück an derjenigen Fläche der Anschlagplatte an, durch die die Schwenkachse des Sägewerkzeugs nicht geht.

Vorzugsweise ist bei einem Gehrungsanschlag mit einer in ihrer Längsrichtung verschiebbaren Anschlagschiene vorgesehen, dass eine zwischen dem Werktisch und der Anschlagschiene angeordnete Lagerplatte einerseits mit einem Achszapfen und andererseits fest, aber lösbar mit einem unterseitig in der Anschlagschiene längsverschieblichen Läufer verbunden ist. Es ist damit die von der Anschlagschiene unabhängige Lagerplatte, welche die Schwenkachse der Anschlagschiene aufweist. Zugleich gewährleistet der an der Lagerplatte arretierbare Läufer die geführte Verschieblichkeit der Anschlagschiene in ihrer Längsrichtung, so dass eine Nachführung der Anschlagschiene in ihrer Längsrichtung dann möglich ist, wenn sich bei ihrer Verschwenkung der Abstand zur Schnittebene vergrößert, aber der ursprüngliche, in der zur Schnittebene senkrechten Nullstellung der Anschlagschiene eingestellte Abstand beibehalten werden soll.

Vorteilhaft ist zur drehfesten Verbindung des in der Anschlagschiene geführten Läufers mit der Lagerplatte ein in Längsrichtung der Anschlagschiene verlaufende Nut/Feder-Eingriff und zur Fixierung des Läufers in Längsrichtung ein Konusknebel vorgesehen, wobei der Konusknebel in einen komplementären Durchlass in der Lagerplatte eingreift, zu dem von ihrem Rand in der Längsrichtung des Nut/Feder-Eingriffs ein sich verengender Einweiserschlitz führt. Die Läufer-Führung und -Befestigung an der Lagerplatte ist quer zur Längsrichtung der Anschlagschiene gegenüber der Schwenkachse der Lagerplatte und damit der Anschlagschiene versetzt, so dass einerseits die Lage der Schwenkachse in der Ebene der Anschlagfläche der Anschlagschiene ermöglicht wird und andererseits beide Elemente nicht miteinander in Konflikt geraten. Selbstverständlich lässt sich jede Längsstellung des Läufers gegenüber der Anschlagschiene in bekannter Weise arretieren. Darüber hinaus ist ein unterseitiger Anschlag in der Anschlagschiene für den Läufer vorgesehen, so dass die Längsbewegung der Anschlagschiene weg vom Bearbeitungswerkzeug begrenzt, wobei die Anschlaglage die Nullstellung der Anschlagschiene gegenüber dem Bearbeitungswerkzeug definiert.

Vorzugsweise sind auf dem Werkstück parallel zur Schnittebene mit Abstand voneinander zwei Lagerplatten für die selbe Anschlagschiene vorgesehen, deren Schwenkachsen in den Ebenen der virtuell einander zugewandten Anschlagflächen liegen. Dabei dient die eine Lagerplatte im Wesentlichen für Ausschwenkungen der Anschlagschiene in Uhrzeigerrichtung, die andere Lagerplatte im Wesentlichen für Ausschwenkungen in die Gegenrichtung, so dass die jeweilige Anschlagfläche der Anschlagschiene regelmäßig spitze Winkel mit der Schnittebene einschließt. Dabei kann ein Anschlag am Werktisch die jeweilige Schwenk-Nullstellung der Anschlagschiene definieren. Außerdem ist im Fall einer längsverschieblichen Anschlagschiene vorgesehen, dass zwischen der Anschlagschiene und dem Werktisch ein Stopper wirksam ist, der das Rückschwenken der Anschlagschiene im vorgeschobenen Zustand aus einer Verschwenkstellung in die Nullstellung verhindert, damit keine Kollision der Anschlagschiene mit dem Bearbeitungswerkzeug eintritt.

Wenn - wie bereits angesprochen - im Falle eines Gehrungsschnitts die in der Nullstellung der Anschlagschiene eingestellte Fertiglänge des Werkstücks beibehalten wird, kann an der Anschlagschiene eine Skalierung angebracht werden, welche für jeden Winkel die erforderliche Längsverschiebung der Anschlagschiene gegenüber dem Läufer und damit die Lagerplatte angibt. Die entsprechende Relativstellung der Anschlagschiene zum Läufer wird dann in Abhängigkeit vom eingestellten Schwenkwinkel abgelesen und ihrerseits eingestellt. Die Anordnung kann jedoch auch derart getroffen werden, dass ein Messwertaufnehmer für den Schwenkwinkel mit einem Rechner verbunden ist, der auf einem Display den erforderlichen Längenausgleich der Anschlagschiene anzeigt. Eine solche Anordnung kann ferner dadurch weitergebildet werden, dass ein weiterer Messwertaufnehmer, nämlich einer für die Längsverschiebung der Anschlagschiene derart mit jenem Rechner verbunden ist, dass bei korrektem Längenausgleich das Display Null zeigt oder ein Signal abgegeben wird. Die Bedienungsperson braucht dann die Längsverschiebung der Anschlagschiene nur soweit nachzuführen, bis durch Null-Anzeige oder Signalgabe das Erreichen des zutreffendes Wertes angezeigt wird.

Die Zeichnung veranschaulicht die Erfindung an einem Ausführungsbeispiel. Darin zeigt:
- Figur 1: einen Werkstücktisch (Quertisch) in Draufsicht mit der erfindungsgemäß gelagerten Anschlagschiene;
- Figur 2: eine Ansicht derselben Anordnung von unten;
- Figur 3: eine Unteransicht nur der Anschlagschiene;
- Figur 4: einen Schnitt gemäß der Linie IV-IV in Figur 2;
- Figur 5: einen Schnitt gemäß der Linie V-V in Figur 2 und
- Figur 6: einen Längsschnitt durch das maschinenseitige Ende der Anschlagschiene, ihre Lagerung auf dem Werktisch und den Oberwagen des angrenzenden Doppelrollwagens.

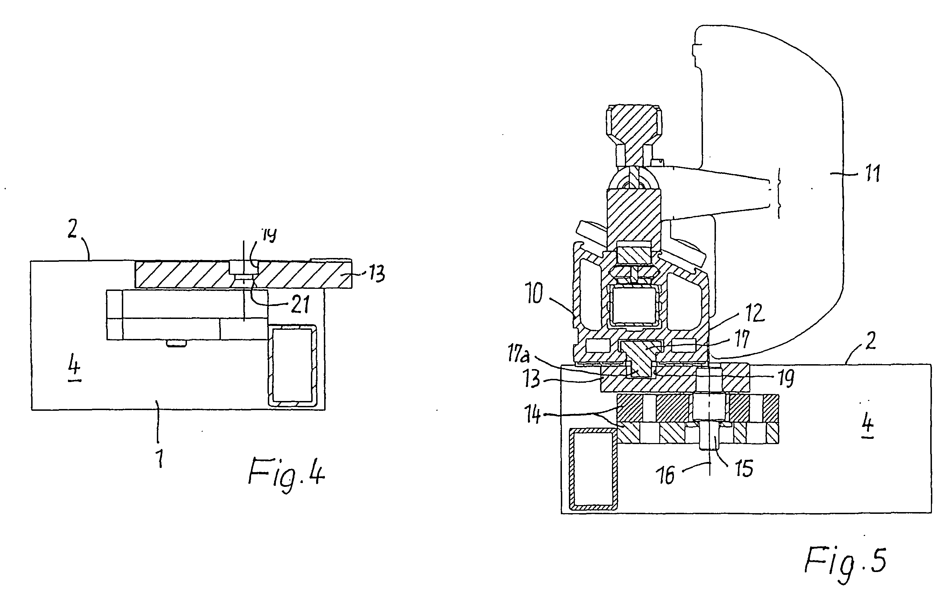

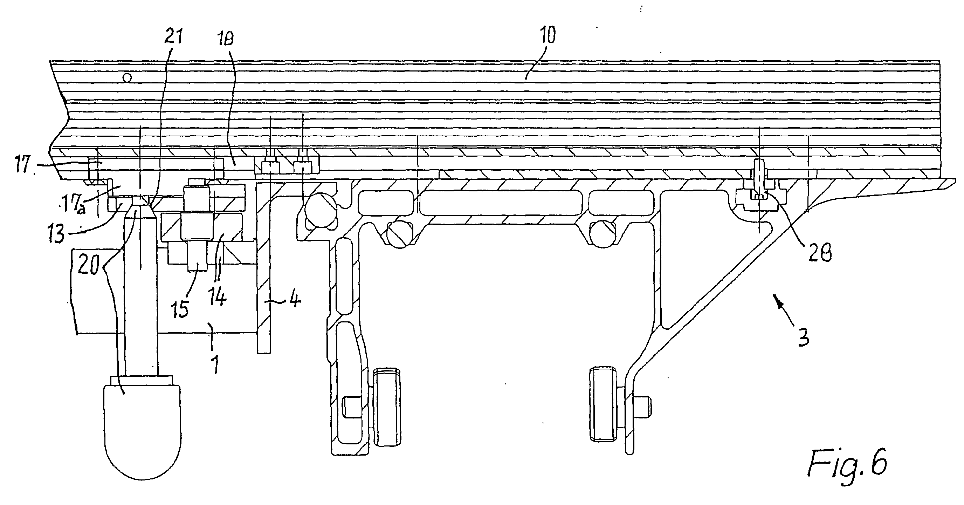

Der im ganzen mit 1 bezeichnete Werktisch (Quertisch) besteht aus einem Rahmenwerk und aus mehren Holmen, so dass eine Oberfläche 2 (Figuren 4 bis 6) keine durchgehende, sondern eher eine virtuelle ist, sich aber gleichwohl zur Abstützung seitlich aus der Maschine und namentlich deren Rollwagen 3 (Figur 6) ragender Werkstücke eignet. Mit dem Rahmenholmen 4 ist der Werktisch 1 in der aus Figur 6 ersichtlichen Weise am Rollwagen 3 befestigt.

Auf der Oberfläche 2 des Werktisches 1 ist eine Anschlagschiene 10 befestigt, deren Querschnittsprofil der Figur 5 entnehmbar ist. Sie trägt in üblicher Weise durch Schwenken umlegbare und längst der Anschlagschiene verschiebbare Anschlagklappen 11, die als Längenanschläge dienen. Für den vorliegend in erster Linie interessierenden Seitenanschlag steht die Anschlagfläche 12 der Anschlagschiene 10 zur Verfügung.

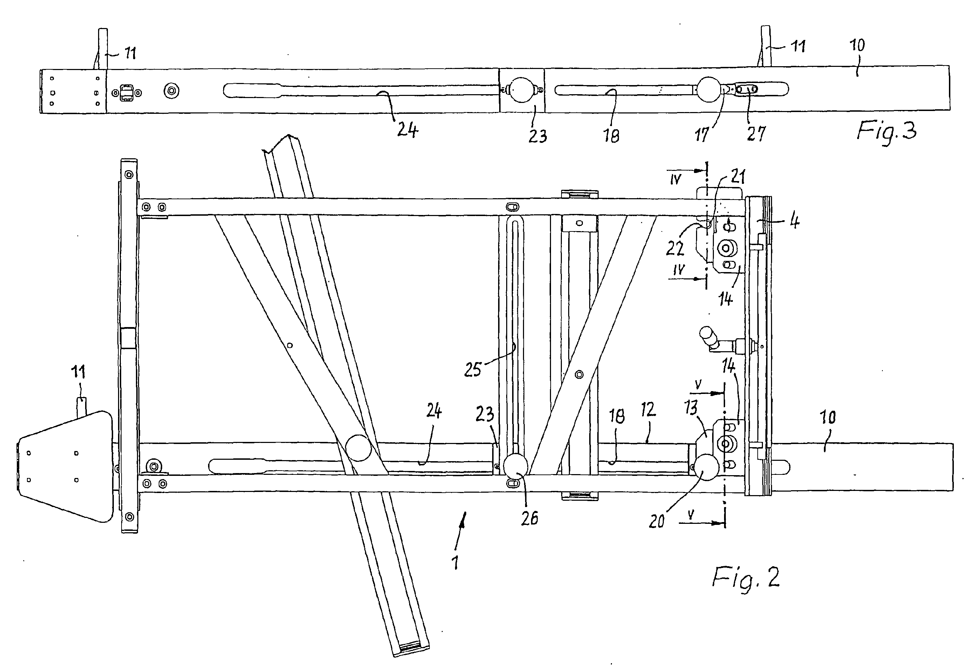

Auf dem Werktisch 1 ist die Anschlagschiene mit Hilfe einer Lagerplatte 13 befestigbar, die ihrerseits auf einem am Querholm 4 des Werktisches 1 befestigten Lagerbock 14 mit Hilfe eines Zapfens 15 um die Achse 16 schwenkbar gelagert ist. Die Schwenkachse 16 liegt in der Ebene der Anschlagfläche 12 der Anschlagschiene 10 (der geringfügige Versatz in Figur 5 dient lediglich der Kenntlichmachung). Die Arretierung der Anschlagschiene 10 auf der Lagerplatte 13 erfolgt mit Hilfe eines Läufers 17, der in einer T-Nut 18 verschieblich ist, die auf der Unterseite der Anschlagschiene 10 angeordnet ist (Figur 3). Mit seinem aus der Nut 18 ragenden Abschnitt 17a (Feder) greift der Läufer 17 in eine Nut 19 der Lagerplatte 13 ein und gewährleistet auf diese Weise die Verdrehfestigkeit der Anschlagschiene 10 gegenüber der Lagerplatte 13. In Längsrichtung erfolgt die Arretierung des Läufers 17 gegenüber der Lagerplatte 13 durch einen (lösbaren) Konusknebel 20, welcher im arretierenden Zustand in einen konisch erweiterten Durchlass 21 in der Nut 19 eingreift (Figuren 2 und 4).

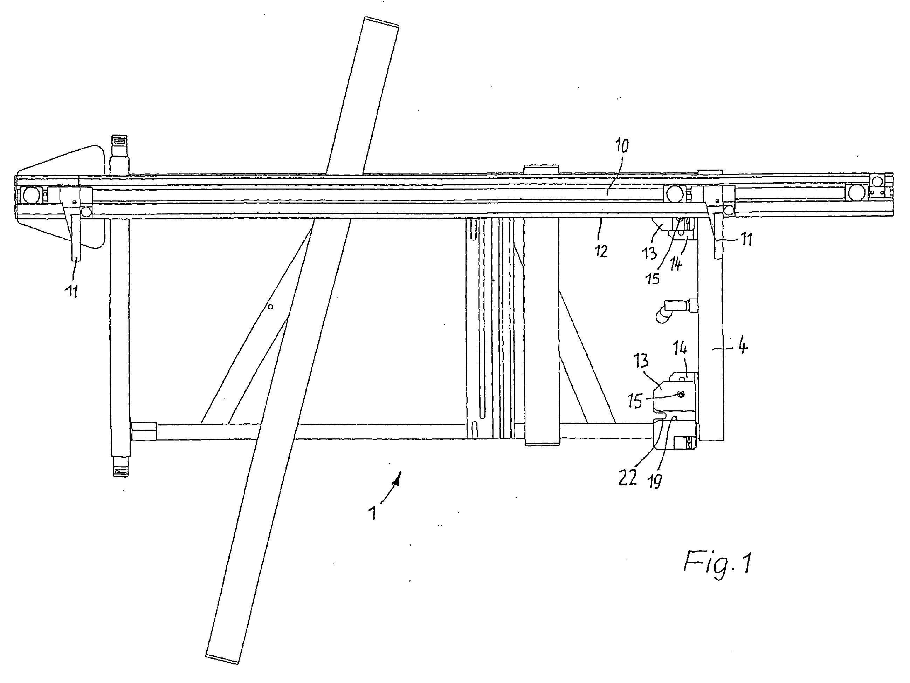

Die Figuren 1 und 2 machen deutlich, dass am Querholm 4 des Werktisches 1 zwei voneinander beabstandete, aus je einer Lagerplatte 13 und dem Lagerbock 14 bestehende Auflager für die Anschlagschiene 10 angeordnet sind. Von diesen dient das eine Auflager für das Verschwenken der Anschlagschiene 10 in Uhrzeigerrichtung und das andere für das Verschwenken der Anschlagschiene 10 in Gegenrichtung. Zum Umsetzen der Anschlagschiene 10 wird der Konusknebel 20 gelöst und der Läufer 17 aus der Nut 19 herausgezogen, die Schiene auf die andere Seite des Werktisches 1 verschoben und der Läufer 17 in die Nut 19 der anderen Lagerplatte 13 eingeschoben sowie dort mit dem Konusknebel 20 verriegelt. Um das Einführen des Läufers 17 in die Nut 19 zu erleichtern, hat diese am Anfang einen sich verengenden Einweiserschlitz 22 für den Konusknebel 20. Der weiteren Arretierung der Anschlagschiene 10 auf dem Werkstück 1 dient ein Block 23, der in einer der Nut 18 im Wesentlichen entsprechenden weiteren Nut 24 auf der Unterseite der Anschlagschiene 10 (Figur 3) in Längsrichtung der Anschlagschiene verschiebbar und außerdem in einem Querschlitz 25 des Werktisches 1 geführt ist, wobei ein lösbarer Knebel 26 die gewünschte Relativlage der Anschlagschiene gegenüber dem Werktisch 1 arretiert.

Bei gelöstem Knebel 26 ist eine Längsverschiebung der Anschlagschiene 10 möglich. Dann bewegt sich der Läufer 17 in der Nut 18 und der Block 23 in der Nut 24. Ein Anschlag 27 am Ende der Nut 18 definiert die Nullstellung der Anschlagschiene relativ zur Schnittebene des (nicht dargestellten) Sägeblatts. Wird die Anschlagschiene 10 aus ihrer in den Figuren 1 und 2 dargestellten lotrechten Stellung gegenüber der Schnittebene des Sägeblatts ausgeschwenkt, und zwar um die durch die Anschlagfläche 12 gehende Achse 16 der Lagerplatte 13, dann vergrößert sich zwangsläufig der Abstand der Anschlagklappen 11 in Richtung der Anschlagschiene 10 von der Schnittebene. Soll er beibehalten werden, muss die Anschlagschiene 10 zur Schnittebene hin in ihrer Längsrichtung verschoben werden, wie dies soeben beschrieben wurde.

Für das Maß der Verschiebung können Tabellen dienen, welche die erforderliche Annäherung in Abhängigkeit vom Schwenkwinkel angeben. Es ist jedoch auch möglich, den Schwenkwinkel mittels eines Messwertaufnehmers festzustellen und einem Rechner zuzuführen, der auf einem Display den erforderlichen Längenausgleich der Anschlagschiene anzeigt. Nimmt man außerdem mit einem weiteren Messwertaufnehmer die Längsverschiebung der Anschlussschiene auf, kann man dessen Ausgang derart mit dem Rechner verbinden, dass bei korrektem Längenausgleich das Display Null zeigt oder ein Signal abgegeben wird. Die Bedienungsperson braucht dann ohne Rücksicht auf den jeweils absoluten Wert des Schwenkwinkels die Längsverschiebung der Anschlagschiene nur soweit vorzunehmen, dass es zu der Nullanzeige oder Signalgabe kommt.

Um den jeweiligen Schwenkwinkel der Anschlagschiene zu begrenzen, kann am Werktisch ein entsprechender Anschlag vorgesehen sein. Ferner ist, um beim Rückschwenken der zur Schnittebene hin verschobenen Anschlagschiene eine Kollision derselben mit dem Sägeblatt zu verhindern, ein Stopper 28 in Form eines in der Anschlagschiene 10 drehbar befestigten Rädchens vorgesehen, welches in einer Nut des Rollwagens 3 abläuft (Figur 6).

## Patentansprüche

1. Gehrungsanschlag für ein Werkstück, das auf einem relativ zu einem Bearbeitungswerkzeug längsbeweglichen Werktisch (1) angeordnet ist,
mit einer Anschlagschiene (10), die auf dem Werktisch (1) um eine Achse (16) schwenkbar gelagert ist und eine zur Oberfläche des Werktisches (1) senkrechte Anschlagfläche (12) aufweist,
**dadurch gekennzeichnet, dass** die Schwenkachse (16) der Anschlagschiene (10) in der Ebene der Anschlagfläche (12) liegt.

2. Gehrungsanschlag nach Anspruch 1 mit einer in ihrer Längsrichtung verschiebbaren Anschlagschiene,
**dadurch gekennzeichnet, dass** eine zwischen dem Werktisch (1) und der Anschlagschiene (10) angeordnete Lagerplatte (13) einerseits mit einem Achszapfen (15) und andererseits fest, aber lösbar mit einem unterseitig in der Anschlagschiene (10) längsverschieblichen Läufer (17) verbunden ist.

3. Gehrungsanschlag nach Anspruch 2,
**dadurch gekennzeichnet, dass** zur drehfesten Verbindung des in der Anschlagschiene (10) geführten Läufers (17) mit der Lagerplatte (13) ein in Längsrichtung der Anschlagschiene verlaufenden Nut (19) / Feder (17a) -Eingriff und zur Fixierung des Läufers (17) in Längsrichtung ein Konusknebel (20) vorgesehen ist, wobei der Konusknebel (20) in einen komplementären Durchlass (21) in der Lagerplatte (13) eingreift, zu dem von ihrem Rand in der Längsrichtung des Nut/Feder-Eingriffs ein sich verengender Einweiserschlitz (22) führt.

4. Gehrungsanschlag nach Anspruch 2,
**dadurch gekennzeichnet, dass** ein unterseitiger Anschlag (27) in der Anschlagschiene für den Läufer (17) die Längsbewegung der Anschlagschienen (10) weg vom Bearbeitungswerkzeug begrenzt (Nullstellung).

5. Gehrungsanschlag nach einem der Ansprüche 2 bis 4,
**dadurch gekennzeichnet, dass** zwei Lagerplatten (13) für die selbe Anschlagschiene (10) vorgesehen sind, deren Schwenkachsen (16) in den Ebenen der virtuell einander zugewandten Anschlagflächen (12) liegen.

6. Gehrungsanschlag nach einem der vorhergehenden Ansprüche,
**dadurch gekennzeichnet, dass** ein Anschlag am Werktisch (1) die (jeweilige) Schwenk-Nullstellung der Anschlagschiene (10) definiert.

7. Gehrungsanschlag nach einem der vorhergehenden Ansprüche,
**dadurch gekennzeichnet, dass** ein zwischen der Anschlagschiene (10) und dem Werktisch (1) wirksamer Stopper (28) das Rückschwenken der Anschlagschiene (10) in ihre Schwenk-Nullstellung im vorgeschobenen Zustand verhindert.

8. Gehrungsanschlag nach einem der vorhergehenden Ansprüche,
**dadurch gekennzeichnet, dass** ein Messwertaufnehmer für den Schwenkwinkel mit einem Rechner verbunden ist, der auf einem Display den erforderlichen Längenausgleich der Anschlagschiene (10) anzeigt.

9. Gehrungsanschlag nach Anspruch 8,
**dadurch gekennzeichnet, dass** ein Messwertaufnehmer für die Längsverschiebung der Anschlagschiene (10) derart mit dem Rechner verbunden ist, dass bei korrektem Längenausgleich das Display Null zeigt oder ein Signal abgegeben wird.

## Claims

1. Mitre stop for a workpiece arranged on a workbench (1) movable longitudinally relative to a machining tool, having a stop rail (10) which is mounted on the workbench (1) to be pivotable about an axis (16) and has a stop face (12) perpendicular to the surface of the workbench (1),
**characterised in that** the pivot axis (16) of the stop rail (10) lies in the plane of the stop face (12).

2. Mitre stop according to Claim 1, having a stop rail displaceable in its longitudinal direction,
**characterised in that** a bearing plate (13) arranged between the workbench (1) and the stop rail (10) is connected, on the one hand, to a pivot (15) and, on the other hand, fixedly but releasably to a runner (17) displaceable longitudinally at the underside in the stop rail (10).

3. Mitre stop according to Claim 2,
**characterised in that** a groove (19)/tongue (17a) engagement running in the longitudinal direction of the stop rail is provided for the rotationally fixed connection of the runner (17), guided in the stop rail (10), to the bearing plate (13), and a conical toggle (20) is provided for fixing the runner (17) in the longitudinal direction, the conical toggle (20) engaging in a complementary passage (21) in the bearing plate (13), to which passage there leads from the edge of the bearing plate a guide-in slot (22) narrowing in the longitudinal direction of the groove/tongue engagement.

4. Mitre stop according to Claim 2,
**characterised in that** a stop (27) at the underside in the stop rail for the runner (17) limits the longitudinal movement of the stop rails (10) away from the machining tool (zero position).

5. Mitre stop according to one of Claims 2 to 4,
**characterised in that** two bearing plates (13) are provided for the same stop rail (10), the pivot axes (16) of which lie in the planes of the, virtually, mutually facing stop faces (12).

6. Mitre stop according to one of the preceding claims,
**characterised in that** a stop on the workbench (1) defines the (respective) zero pivoting position of the stop rail (10).

7. Mitre stop according to one of the preceding claims,
**characterised in that** a stopper (28) active between the stop rail (10) and the workbench (1) prevents the stop rail (10) from pivoting back into its zero pivoting position in the advanced state.

8. Mitre stop according to one of the preceding claims,
**characterised in that** a sensor for the pivoting angle is connected to a computer, which displays the required length compensation of the stop rail (10) on a display.

9. Mitre stop according to Claim 8,
**characterised in that** a sensor for the longitudinal displacement of the stop rail (10) is connected to the computer in such a way that, given correct length compensation, the display displays zero or a signal is emitted.

## Revendications

1. Butée à onglet pour une pièce d'oeuvre qui est disposée sur une table de travail (1) pouvant être déplacée longitudinalement par rapport à un outil d'usinage,
comprenant une glissière de butée (10) qui est montée sur la table de travail (1) de manière à pouvoir pivoter autour d'un axe (16), et présente une surface de butée (12) perpendiculaire à la surface de la table de travail (1),
**caractérisée en ce que** l'axe de pivotement (16) de la glissière de butée (10) se situe dans le plan de la surface de butée (12).

2. Butée à onglet selon la revendication 1, comprenant une glissière de butée pouvant coulisser dans sa direction longitudinale,
**caractérisée en ce qu'**une plaque de palier (13) disposée entre la table de travail (1) et la glissière de butée (10), est reliée d'une part à un tourillon d'axe (15) et d'autre part, de manière fixe mais démontable, à un curseur (17) pouvant coulisser longitudinalement dans la glissière de butée (10), sur le côté inférieur de celle-ci.

3. Butée à onglet selon la revendication 2,
**caractérisée en ce que** pour la liaison fixe de rotation du curseur (17) guidé dans la glissière de butée (10) avec la plaque de palier (13), il est prévu une liaison du type à rainure (19)/languette (17a) s'étendant dans la direction longitudinale de la glissière de butée, et pour la fixation du curseur (17) dans la direction longitudinale, une manette à cône (20), la manette à cône (20) s'engageant dans un passage complémentaire (21) dans la plaque de palier (13), auquel mène une fente d'insertion (22) qui se rétrécit à partir de son bord dans la direction longitudinale de la liaison du type à rainure/languette.

4. Butée à onglet selon la revendication 2,
**caractérisée en ce qu'**une butée (27) sur le côté inférieur dans la glissière de butée, pour le curseur (17), limite le mouvement longitudinal des glissières de butée (10) en s'éloignant de l'outil d'usinage (position zéro).

5. Butée à onglet selon l'une des revendications 2 à 4,
**caractérisée en ce que** deux plaques de palier (13) sont prévues pour la même glissière de butée (10), dont les axes de pivotement (16) sont situés dans les plans des surfaces de butée (12) dirigées virtuellement l'une vers l'autre.

6. Butée à onglet selon l'une des revendications précédentes,
**caractérisée en ce qu'**une butée sur la table de travail (1) définit la position zéro de pivotement (respective) de la glissière de butée (10).

7. Butée à onglet selon l'une des revendications précédentes,
**caractérisée en ce qu'**un stoppeur (28) agissant entre la glissière de butée (10) et la table de travail (1) empêche le pivotement en retour de la glissière de butée (10) dans sa position de pivotement zéro, dans l'état avancé.

8. Butée à onglet selon l'une des revendications précédentes,
**caractérisée en ce qu'**un capteur de valeur de mesure pour l'angle de pivotement est relié à un calculateur, qui indique sur un écran, la compensation de longueur nécessaire de la glissière de butée (10).

9. Butée à onglet selon la revendication 8,
**caractérisée en ce qu'**un capteur de valeur de mesure pour le coulissement longitudinal de la glissière de butée (10) est relié de manière telle au calculateur, que dans le cas d'une compensation de longueur correcte, l'écran affiche zéro ou un signal est délivré.
